# EUROPÄISCHE PATENTSCHRIFT

(11) **EP 3 139 347 B1**
(45) Veröffentlichungstag und Bekanntmachung des Hinweises auf die Patenterteilung: **13.06.2018**
(21) Anmeldenummer: 16001709.1
(22) Anmeldetag: 02.08.2016
(51) Int. Cl.: F41H 11/00, G01C 11/02, G06T 7/70, G06T 5/50

(54) **VERFAHREN ZUM BESTIMMEN EINER AUSRICHTUNG EINES OBJEKTS**
METHOD FOR DETERMINING AN ALIGNMENT OF AN OBJECT
PROCÉDÉ DE DÉTERMINATION DE L'ALIGNEMENT D'UN OBJET

(30) Priorität: 20.08.2015 DE 102015010919
(43) Veröffentlichungstag der Anmeldung: 08.03.2017
(73) Patentinhaber: Diehl Defence GmbH & Co. KG, 88662 ÜBERLINGEN (DE)
(72) Erfinder: Tholl, Hans Dieter, DE - 88682 Salem (DE); Reischmann, Hans-Ludwig, DE - 88662 Überlingen (DE)
(74) Vertreter: Diehl Patentabteilung

(56) Entgegenhaltungen:
- EP-B1- 1 745 309
- WO-A1-2011/158885
- WO-A2-2004/017088
- US-A- 5 220 164
- US-A- 5 631 976
- US-A- 5 999 652
- US-A1- 2001 030 280
- US-A1- 2002 176 605
- US-A1- 2007 263 099
- Anonymous: "Molecular Expressions Microscopy Primer: Digital Imaging in Optical Microscopy - Concepts in Digital Imaging - Digital Camera Readout and Frame Rates", , 24. Mai 2005 (2005-05-24), XP055336263, Gefunden im Internet: URL:https://micro.magnet.fsu.edu/primer/di gitalimaging/concepts/readoutandframerates .html [gefunden am 2017-01-17]
- WOODHAM R J ED - DRIGGERS RONALD G: "PHOTOMETRIC METHOD FOR DETERMINING SURFACE ORIENTATION FROM MULTIPLE IMAGES", OPTICAL ENGINEERING, SOC. OF PHOTO-OPTICAL INSTRUMENTATION ENGINEERS, BELLINGHAM, Bd. 19, Nr. 1, 1. Januar 1980 (1980-01-01) , Seiten 139-144, XP008079323, ISSN: 0091-3286

## Beschreibung

Die Erfindung betrifft ein Verfahren zum Bestimmen einer Ausrichtung eines Objekts.
Mit zunehmender Verkehrsdichte von Luftfahrzeugen, insbesondere zivilen Passagierflugzeugen, auch in Krisenregionen geht das Problem einher, dass solche Flugzeuge Ziel von Angriffen durch Boden-Luft-Raketen werden können. Gerade zivile Großraumflugzeuge sind durch ihre geringe Manövrierfähigkeit besonders gefährdet. Um jedoch Gegenmaßnahmen einleiten zu können, ist es sinnvoll, das Anfliegen eines bedrohenden Flugkörpers zu erkennen.
Aus dem Stand der Technik sind verschiedene Systeme und Verfahren zur Erkennung von Flugkörpern bzw. Raketen oder anderen Luftfahrzeugen bekannt: Die US 5 999 652 A offenbart ein Verfahren zur Detektion der Abgasfahne eines Flugkörpers oder eines Jets. Gemäß diesem Verfahren werden nacheinander aufgenommene Bilder voneinander subtrahiert. Da das Gas der Abgasfahne eine hohe Modulationsrate aufweist, werden die Bilder mit einer Bildrate von größer als 1000 Hz aufgenommen, so dass zu einem Differenzbild nur die Pixel beitragen, die in den beiden Bildern unterschiedliche Werte aufweisen. Hintergrundobjekte - wie der Flugkörper selbst - sind im Differenzbild nicht mehr sichtbar. Die EP 1 745 309 B1 beschäftigt sich mit einem Schutzsystem für Flugzeuge gegenüber Raketen. Das Schutzsystem weist ein optronisches Modul zur Erfassung / Verfolgung von Raketen auf mit einem Sendekopf zur Ausstrahlung eines Laserstrahls, um die Raketen zu stören. Die US 2001/030280 A1 beschreibt ein Verfahren zur autonomen Detektion von Hubschraubern von einer fliegenden Plattform aus, bei dem relevante Bildregionen zweier von einem bildgebenden Sensor aufeinanderfolgend aufgenommener Bilder bildpunktweise voneinander subtrahiert werden.

Weiter ist es aus verschiedenen technischen Gebieten bekannt, auf digitale Bildtechnologie zurückzugreifen, dabei kommen zum Teil Maßnahmen zur Unterdrückung störender Bildhintergründe zum Einsatz. Aus der WO 2011/15885 A1 ist eine Messeinrichtung zur Messung bzw. Bestimmung der Position/Orientierung eines Objektes bekannt. Solche Einrichtungen werden z. B. für die industrielle Montage benötigt, um beispielsweise die relative Position und Orientierung eines Teils in Bezug auf eine Roboter-Hand zu bestimmen, welche das Teil ergreifen soll. Hierfür wird eine Zuordnung zwischen Bildmerkmalen, die aus einem zweidimensionalen Bild ermittelt wurden, und geometrischen Merkmalen eines dreidimensionalen Formmodells vorgenommen. Die US 5 631 976 A beschäftigt sich mit einem Bildverarbeitungssystem zur Segmentierung eines Objekts von einem Hintergrund mittels Steuerung einer Lichtquelle. Es werden zwei Bilder aufgenommen, wobei eines der Bilder stärker als das andere beleuchtet wird. Zur Segmentierung des Objekts werden die Bilder miteinander verglichen und die Pixel, deren Helligkeitswert sich erhöht hat, werden dem Objekt zugeordnet und dieser Teil des Bildes wird segmentiert. Die WO 2004/017088 A2 schlägt zur Unterdrückung von Bewegungsartefakten in Differenzbildern vor, zeitlich verschachtelte Bildsubtraktionen vorzunehmen, und zur Unterdrückung von Umgebungslicht beleuchtete und unbeleuchtete Bilder zu subtrahieren. Die US 2007/0263099 A1 setzt sich mit einem Verfahren auseinander, mit welchem Umgebungslicht in digitalen Videobildern unterdrückbar ist. Hierfür wird ein Bild, welches vom Umgebungslicht beleuchtet ist, aufgenommen und ein Bild, welches zusätzlich zum Umgebungslicht von einer Lichtquelle beleuchtet ist. Die den beiden Bilder zugeordneten Pixel-Daten werden in einem Speicher abgespeichert und voneinander abgezogen, um ein Bild mit unterdrücktem Umgebungslicht zu erhalten. Um eine effektive Unterdrückung des Umgebungslichts zu erzielen, werden die beiden Bilder kurz hintereinander in einer Bildrate aufgenommen. Der Internet-Artikel "Molecular Expressions Microscopy Primer: Digital Imaging in Optial Microscopy - Concepts in Digital Imaging - Digital Camera Readout and Frame Rates" (Autor unbekannt, gefunden im Internet am 17.01.2017 unter URL: https://micro.magnet.fsu.edu/primer/digitalimaging/concepts/readoutandframerates. htm l) beschäftigt sich mit digitaler Bildtechnologie für Anwendungen in der Mikroskopie. Zur Beschleunigung der Bildrate von Kameras wird vorgeschlagen, Aufnahmezeiten von Auslesezeiten für Bilder überlappen zu lassen. Der Zeitschriftenartikel "Photmetric Method For Determining Surface Orientation From Multiple Images" (Robert J. Woodham, Optical Engineering, Soc. Of Photo-Optical Instrumentation Engineers, Bellingham, Bd. 19, Nr. 1, 01.01.1980, Seiten 139 - 144, ISSN: 0091-3286) beschäftigt sich mit einem photometrischen Verfahren zur Bestimmung der Oberflächenorientierung von mehrfachen Bildern.

Es ist daher eine Aufgabe der vorliegenden Erfindung, ein Verfahren zum zuverlässigen Erkennen einer Ausrichtung eines Objekts anzugeben. Es ist weiterhin eine Aufgabe der Erfindung, ein Verfahren zum möglichst raschen Erkennen einer Ausrichtung eines Objekts anzugeben.

Diese Aufgabe wird durch ein Verfahren gemäß den Merkmalen von Patentanspruch 1 gelöst, bei dem das Objekt mithilfe einer Kamera zumindest zweimal aufgenommen wird und das Objekt bei einem der Bilder anders beleuchtet aufgenommen wird als bei dem anderen Bild, die Bilder voneinander subtrahiert werden und unter Verwendung der Bilddaten des aus der Subtraktion erhaltenen Beleuchtungsreflexes die Ausrichtung des Objekts bestimmt wird.

Die Erfindung geht von der Überlegung aus, dass es zur Bestimmung eines Gefährdungspotenzials eines anfliegenden Flugkörpers hilfreich ist, nicht nur den Flugkörper an sich zu erkennen, sondern auch seine Flugrichtung beziehungsweise Ausrichtung im Raum zu bestimmen. Auf diese Weise kann besser abgeschätzt werden, ob ein anfliegender Flugkörper eine Bedrohung darstellt oder nicht und gegebenenfalls zügig eine Gegenmaßnahme ergriffen werden muss. Durch die Bildsubtraktion kann das Bild des Objekts besonders gut vom Bildhintergrund getrennt werden, sodass die Bestimmung der Ausrichtung des Objekts, beispielsweise mit Hilfe von bildverarbeitenden Methoden, vereinfacht werden kann.

Das Objekt wird bei einem der Bilder anders beleuchtet aufgenommen als bei dem anderen Bild. Dies kann geschehen, indem das Objekt bei der Aufnahme des einen Bilds anders beleuchtet wird, als bei der Aufnahme des anderen Bilds. Je nach Entfernung des Objekts von der Kamera und der Aufnahmegeschwindigkeit kann es jedoch bereits ausreichend sein, wenn das Objekt zunächst anders beleuchtet wird, beispielsweise durch Bestrahlung mit einem Strahler, wie einem Laser, die Bildaufnahme jedoch erst dann beginnt, wenn die andere Beleuchtung bereits beendet ist, in diesem Beispiel der Laser bereits ausgeschaltet ist. Die Beleuchtungsreflexion wird durch die gewisse Lichtlaufzeit zur Kamera die Kamera während der Bildaufnahme erreichen. In diesem Fall wird das Objekt zwar nicht während der Bildaufnahme beleuchtet, das Objekt wird jedoch beleuchtet aufgenommen.

Die unterschiedliche Beleuchtung des Objekts geschieht zweckmäßigerweise so, dass die Beleuchtungsstrahlung vom Objekt stärker reflektiert wird als vom Hintergrund des Objekts. Bei der Subtraktion der Bilder kann das Bild des Objekts hierdurch hervorgehoben werden. Die anders beleuchtete Aufnahme kann realisiert werden, indem das Objekt beleuchtet und später nicht beleuchtet wird oder das Objekt stärker und schwächer beleuchtet wird oder mit verschiedenen Wellenlängen beleuchtet wird. Zweckmäßigerweise wird das Objekt vom Kamerasystem aus aktiv angestrahlt, beispielsweise von einem Strahler, der in der Nähe der Kamera oder in der Kamera integriert angeordnet ist. Vorteilhafterweise ist die Kamera und insbesondere auch der Strahler in einem Fahrzeug, zweckmäßigerweise einem zu schützenden Luftfahrzeug, angeordnet. Zur Durchführung der Bildsubtraktion werden zweckmäßigerweise die Bilddaten der gleichen Detektorelemente eines Sensors der Kamera bzw. einander entsprechender Bildpunkte oder Pixel der beiden Bilder voneinander subtrahiert.

Entsprechend der Erfindung ist das Objekt eine Unterbaugruppe des Flugkörpers, der beispielsweise ein Luftfahrzeug, das die Kamera trägt, anfliegt. Ist der Flugkörper mit einer Suchoptik, welche als Unterbaugruppe des Flugkörpers angesehen werden kann, ausgestattet, so wird in sie einfallende Strahlung, insbesondere Infrarotstrahlung, retroreflektiert, sodass die Suchoptik, analog wie ein Katzenauge, strahlt. Ist die Suchoptik zur Kamera ausgerichtet, so reflektiert sie die einfallende Strahlung besonders intensiv, sodass aus der reflektierten Strahlung geschlossen werden kann, dass die Suchoptik zur Kamera ausgerichtet ist. Da die Ausrichtung der Suchoptik für einen Flug des Flugkörpers maßgeblich ist und dieser in der Regel in die Richtung, in die die Suchoptik ausgerichtet ist, einschwingt, kann durch die Erkennung der Ausrichtung der Suchoptik auf eine zukünftige Flugrichtung des Flugkörpers geschlossen werden. Eine zukünftige Flugrichtung des Flugkörpers kann abgeschätzt und eine Bedrohung kann leichter erkannt werden.

Um das Bild des Objekts bzw. den Beleuchtungsreflex vom Objekt besonders gut vom Bildhintergrund trennen zu können, ist es vorteilhaft, wenn sich der Bildhintergrund zeitlich zwischen den beiden Aufnahmen möglichst wenig verändert. Dies wird entsprechend der Erfindung dadurch erreicht , dass ein zeitlicher Aufnahmeabstand zwischen den beiden Bildern kleiner als eine Korrelationszeit eines Bildhintergrunds in der Bildnachbarschaft des Objekts ist. Die Korrelationszeit ist eine charakteristische Zeit, die den zeitlichen Abfall einer Korrelationsfunktion, insbesondere einer Autokorrelationsfunktion, beschreibt, wobei deren exponentieller Abfall zweckmäßig ist. Durch die Korrelationsfunktion wird die Fluktuation der Strahlungsleistung beziehungsweise spektralen Strahlungsdichte im Wellenlängenbereich der Kamera beschrieben. Als charakteristische Zeitdauer τ kann verwendet werden: τ = 1 / (2πf_{H}), mit f_{H}: Halbwertsfrequenz der Korrelationsfunktion, beispielsweise der FourierTransformierten der Strahlungsleistung. Fluktuation, Strahlungsleistung und spektrale Strahlungsdichte beziehen sich hierbei zweckmäßigerweise auf einen Raumwinkelbereich, der beispielsweise durch einen Bildbereich, wie einen Bildpunkt, charakterisiert sein kann. Konkret kann als Korrelationszeit diejenige Zeit genommen werden, in der die Autokorrelationsfunktion des Bildhintergrunds auf die Hälfte abgefallen ist, sodass sich ergibt: τ = 1 / (2πf_{3dB}), wobei die Korrelationsfunktion K(t) insbesondere eine Exponentialfunktion ist mit K(t) proportional zu exp(-t/τ). Die Autokorrelationsfunktion beschreibt hierbei zweckmäßigerweise die Korrelation des Bildhintergrundes mit sich selbst zu einem früheren Zeitpunkt beziehungsweise der Bildsignale des Bildhintergrunds, beispielsweise pixelweise, mit sich selbst. Die Funktion gibt an, wie viel Ähnlichkeit die um die Korrelationszeit τ verschobene Strahlung mit der ursprünglichen Strahlung hat, beispielsweise in einer Wellenlänge bzw. einem Wellenlängenband. Da die ursprüngliche Strahlung, also die zeitlich unverschobene Strahlung, mit sich selbst am ähnlichsten ist, hat die Autokorrelation für die unverschobene Strahlung den größten Wert.

Bei der Aufnahme eines anfliegenden Flugkörpers nimmt die Strahlung der Verbrennungsgase des Triebwerks bzw. der Triebwerksabgase des Flugkörpers einen signifikanten Teil des Bildhintergrunds ein. Eine Subtraktion der Bilder wird daher nur dann zu einem vorteilhaften Ergebnis führen, wenn der zeitliche Aufnahmeabstand zwischen den beiden Bildern nicht größer als eine Korrelationszeit der insbesondere im infraroten Spektralbereich aufgenommenen Verbrennungsgase eines Triebwerks ist, da dann davon auszugehen ist, dass sich der Bildhintergrund des aufgenommenen Bilderpaars während des Zeitraums zwischen den Aufnahmen nur unwesentlich verändert hat. Es verhält sich nämlich so, dass das Erkennen bzw. die Detektion des Beleuchtungsreflexes durch einen Sensor der Kamera dadurch erschwert ist, dass ein Triebwerk bzw. Raketenmotor des Flugkörpers und / oder dessen Verbrennungsgase Strahlung in einem großen Wellenlängenbereich, insbesondere im infraroten Spektralbereich, abgibt, also in einem Bereich in dem die Kamera bzw. ihr Sensor entsprechend der Erfindung seine spektrale Empfindlichkeit aufweist. Da die Strahlung des Raketenmotors bzw. der Verbrennungsgase zeitlich nicht konstant ist, führt sie zu einem zeitlich stark fluktuierenden Hintergrundsignal, in dem das Signal des Sensors hervorgerufen durch den Beleuchtungsreflex leicht verschwinden kann.

Vorteilhafterweise ist der zeitliche Aufnahmeabstand zwischen den beiden Bildern kleiner als 10 ms, da insbesondere die Korrelationszeit der Strahlung eines Raketenmotors bzw. der Verbrennungsgase eines Triebwerks eines Flugkörpers sehr kurz sein kann. Bei einer solchen schnellen Aufnahmefolge der beiden Bilder bzw. des Bilderpaars kann ein aus heißen Abgasen gebildeter Hintergrund ausreichend gut durch Bildsubtraktion aus dem Bild entfernt werden, sodass das Objekt bzw. der Beleuchtungsreflex klar genug zur Bestimmung seiner Ausrichtung hervortritt. Geschickterweise wird daher der zeitliche Aufnahmeabstand zwischen den beiden Bildern so weit reduziert, wie es technisch machbar ist. Besonders vorteilhaft ist es, wenn der zeitliche Aufnahmeabstand zwischen den beiden Bildern weniger als 500 µs, insbesondere weniger als 100 µs beträgt. Oder anders ausgedrückt: Von Vorteil ist es, wenn der zeitliche Aufnahmeabstand zwischen den beiden Bildern zumindest eine Größenordnung (also einen Faktor 10), bevorzugterweise zwei bzw. insbesondere drei Größenordnungen geringer als die Korrelationszeit ist. Hierdurch lässt sich hinsichtlich des Beleuchtungsreflexes ein gutes Signal-Rausch-Verhältnis erreichen, welches eine Bestimmung der Ausrichtung bspw. eines Flugkörpers auch bei nicht genau vorbekannter Korrelationszeit der Strahlung seines Raketenmotors bzw. Triebwerksabgase erlaubt.

Vorteilhafterweise werden die beiden Bilder bzw. das Bilderpaar mit einem Matrixdetektor der Kamera aufgenommen. Die Kamera weist also bevorzugt als Sensor zur Aufnahme eines Bildes einen bildauflösenden Matrixdetektor auf. Es kann ein Bild des Objekts erzeugt werden, aus dem die Richtung des Objekts, beispielsweise mithilfe bildverarbeitender Methoden, bestimmt werden kann. Im Falle einer Suchoptik, insbesondere einer kardanisch gelagerten Suchoptik eines Suchkopfes eines Flugkörpers, deren Ausrichtung bestimmt werden soll, kann es ausreichend sein, wenn der Matrixdetektor eine Pixelzahl von weniger als 10 x 10 Bildpunkten aufweist. Ist der zeitliche Abstand zwischen den beiden Bildaufnahmen sehr klein und damit die Korrelation eines fluktuierenden Hintergrundsignals sehr hoch, so wird die Suchoptik nach der Bildsubtraktion in dem daraus resultierenden Bild als ein oder mehrere Pixel bzw. Bildpunkte umfassender Beleuchtungsreflex erscheinen. Ist die Lage des Beleuchtungsreflex im Bild wenig oder nicht relevant, so kann auf die bildauflösende Darstellung verzichtet werden und anstelle eines mehrere Detektorelemente umfassenden Matrixdetektors auch ein Einelementdetektor verwendet werden. Ein vorliegendes Signal deutet auf die Ausrichtung der Suchoptik auf die Kamera hin, wohingegen das Fehlen des Signals darauf hindeutet, dass die Suchoptik in eine andere Richtung ausgerichtet ist.

Insbesondere bei Verwendung eines Matrixdetektors ist es vorteilhaft, wenn die beiden Bilder bzw. das Bilderpaar mittels zweier, insbesondere aufeinander folgender Integrationszeiträume innerhalb einer Bildzeit aufgenommen werden. Hierdurch können die beiden Bildaufnahmen zeitlich sehr nah aneinander gerückt werden, sodass die Korrelation der Bildhintergründe in den beiden Bildern sehr hoch ist. Zweckmäßigerweise ist eine Auswerteeinheit des Detektors so ausgeführt, dass jedem der beiden Integrationszeiträume ein Auslesezeitraum zugeordnet ist, wobei beide Auslesezeiträume in einer Bildzeit liegen. Die Bildzeit beschreibt also die Zeitspanne, die zum Aufnehmen bzw. zur Integration und zum Auslesen des Bilderpaars benötigt wird.

Da die Auslesezeit insbesondere eines Matrixdetektors eine größere Weile, also einen längeren Zeitraum in Anspruch nehmen kann, ist entsprechend der Erfindung vorgesehen, dass die Aufnahme des nachfolgend aufgenommenen Bilds, also dessen Integrationszeitraum, während des Auslesezeitraums des vorhergehend aufgenommenen Bilds liegt. Hierfür hat zweckmäßigerweise jeder Bildpunkt beziehungsweise jedes Pixel des Detektors zwei Integrationszellen. Die beiden Aufnahmen der beiden Bilder, also deren Integrationszeiträume, können auch unabhängig von länger andauernden Auslesezeiträumen eng zusammengelegt werden, sodass die Korrelation der Bildhintergründe hoch ist. Oder anders ausgedrückt: Die Integrationszeit für das nach dem vorhergehenden Bild aufgenommene Bild startet früher als es die Ausgabezeit des vorhergehenden Bildes bei üblichen Detektoren erlauben würde. Vorliegend sind die Integrations- und Auslesezeiten zeitlich nicht regelmäßig, nicht äquidistant in der Bilderserie angeordnet, sondern die Integrationszeiten eines Bilderpaares liegen eng zusammen.

Es wird also von der üblichen Vorgehensweise des Aufnehmens und Auslesens eines einzigen Bildes innerhalb einer Bildzeit und dem Aufnehmen und Auslesen eines weiteren, einzigen Bildes in einer anschließenden Bildzeit - wie bei üblichen Aufnahmen mit einem Matrixdetektor zu bspw. einer Objekt- bzw. Zielverfolgung abgewichen. Vielmehr ist vorteilhafterweise folgender Ablauf vorgesehen: Innerhalb einer Bildzeit erfolgt quasi eine "Doppelbelichtung", also die Aufnahme eines Bilderpaars bzw. der beiden Bilder, wobei sich an den Integrationszeitraum des ersteren der beiden Bilder der Integrationszeitraum für das zweite der beiden Bilder anschließt, also zwischen dem Zeitraum zwischen den beiden Integrationszeiträumen kein Auslesezeitraum für das erste der beiden Bilder liegt. Hierdurch kann die Zeitspanne zwischen den beiden Integrationszeiträumen verkürzt und damit der Einfluss eines störenden Bildhintergrunds minimiert werden. Insbesondere kann zur Verkürzung der Zeitspanne, also der Bildzeit, zur Aufnahme und zum Auslesen eines weiteren Bilderpaares nach dem Aufnehmen und Auslesen eines vorangegangenen Bilderpaares vorgesehen sein, dass der Auslesezeitraum für das erstere der beiden Bilder eines Bilderpaares bereits vor oder während des Integrationszeitraums für das zweite Bild des Bilderpaares startet bzw. beginnt. Es findet also eine Art "Ineinanderverschachtelung" von Integrationszeitraum für das zweite Bild des Bilderpaars und Auslesezeitraum für das erste Bild des Bilderpaars statt. Dadurch kann die erforderliche Bildzeit für ein Bilderpaar verkürzt werden - als wenn im Vergleich dazu die beiden Auslesezeiträume für die beiden Bilder des Bilderpaares sich erst zeitlich an die Integrationszeiträume für das Bilderpaar anschließen würden.

Je nachdem, wie weit das Objekt von der Kamera entfernt ist, kann die Laufzeit des Lichts von einem Strahler zum Objekt und dann zur Kamera eine Weile dauern. Um zu erreichen, dass das Objekt während der Aufnahme eines der Bilder zuverlässig hell leuchtet und während der Aufnahme des anderen Bilds weniger bestrahlt leuchtet, ist entsprechend der Erfindung vorgesehen, dass das Objekt vor und/oder während der Aufnahme des ersteren Bilds durch einen Strahler aktiv beleuchtet wird, also aktiv beleuchtet aufgenommen wird, und im unmittelbar nachfolgenden Bild, von dem zuvor beleuchtenden Strahler unbeleuchtet aufgenommen wird.

Die unterschiedliche Beleuchtung des Objekts wird entsprechend der Erfindung dadurch erreicht, dass das Objekt durch einen Laser angestrahlt wird. Der Laser kann an- und ausgeschaltet werden, sodass das Objekt einmal beleuchtet und einmal unbeleuchtet aufgenommen wird. Durch den Laser kann das Objekt zielgerichtet angestrahlt werden, und ein Laser kann schnell ein- und ausgeschaltet werden. Als Laser kann sowohl ein im Pulsbetrieb als auch ein im Dauerstrich-Betrieb ("continuous wave", CW) arbeitender Laser verwendet werden.

Gemäß der Erfindung wird das Objekt mit einem Pulszug des Lasers bestrahlt. Der Laser wird während des Pulszugs mehrfach ein- und ausgeschaltet, sodass Lichtpulse in einer vorbestimmten zeitlichen Abfolge auf das Objekt gerichtet werden. Insbesondere bei der Verwendung eines Matrixdetektors ist es vorteilhaft, wenn ein Pulszug in seiner reflektierten Länge vollständig in den Aufnahmezeitbereich eines der Bilder fällt, um eine ausreichende Signaldifferenz bei der anschließenden Subtraktion der Bilder zur Bestimmung der Ausrichtung des Objekts zu erhalten. Wird ein CW-Laser verwendet, wird im Vergleich zu einem Puls-Laser auf Einzelpulse verzichtet, und der CW-Laser mit langen Pulsen moduliert, so dass in diesem Fall ein Laserpuls des CW-Lasers dem Pulszug eines Puls-Lasers mit hochfrequenten Einzelpulsen entspricht. Weder bei der Verwendung eines Puls-Lasers noch bei der Verwendung eines CW-Lasers ist es jedoch zwingend erforderlich, dass ein Pulszug vollständig in den Aufnahmebereich eines der Bilder fällt, entscheidend ist die Gesamtmenge der von der Kamera bzw. dem Matrixdetektor empfangenen retroreflektierten Laserstrahlung innerhalb der Integrationsdauer bzw. der Bildaufnahme, die einen ausreichenden Signalunterschied zur anderen Bildaufnahme aufweisen muss, die anders oder vorzugsweise nicht bestrahlt wird. Es ist also geschickterweise sicherzustellen, dass die Integration des einen Bildes im Fall eines Puls-Lasers der Matrixdetektor eine ausreichende Anzahl an Einzelpulsen empfängt bzw. im Fall eines CW-Lasers der Matrixdetektor eine ausreichende Bestrahlungsdauer erfährt. Hierzu kann der Puls-Laser bzw. der CW-Laser zweckmäßigerweise über die mit dem Matrixdetektor und dem Laser signaltechnisch verbundene Auswerteeinheit entsprechend angesteuert werden, indem beispielsweise die Frequenz der Einzelpulse und / oder ihre Energie erhöht wird. Dies ist insbesondere vorteilhaft in Situationen, bei denen der Abstand zwischen Kamera und Objekt gering ist. Denn in einer solchen Situation ist die durch die Lichtlaufzeit bedingte Verzögerung vom Laser zum Objekt und zurück oftmals so gering, dass die meisten Einzelpulse bzw. ein Teil des Laserpulses den Ort der Kamera bereits vor Beginn der ersten Integration bzw. Bildaufnahme passiert haben / hat, so dass die Kamera bzw. der Matrixdetektor nicht alle reflektierten Einzelpulse bzw. den kompletten reflektierten Laserpuls empfängt. Dies ist jedoch im Fall geringer Abstände in der Regel unkritisch, da die Größe der reflektierten Laserstrahlung mit der vierten Potenz des Abstandes abnimmt, also bei geringen Abständen höher im Vergleich zu größeren Abständen ist. Außerdem wird entsprechend der Erfindung ein Puls des Pulszugs als Trigger für eine Bildaufnahme des Objekts verwendet, also als Trigger für eine Belichtung eines Detektors der Kamera. Besonders vorteilhaft wird der letzte Puls des Pulszugs als Trigger verwendet. Wird ein CW-Laser verwendet, so bietet sich als Trigger für eine Bildaufnahme des Objekts eine steigende oder fallende Flanke der Laser-Modulation an. Es kann vorgesehen sein, dass die beiden Bildaufnahmen mit einem einzigen Trigger bzw. Triggersignal innerhalb einer Bildzeit erfolgen oder dass für jede der beiden Bildaufnahmen ein eigenes Triggersignal innerhalb einer Bildzeit vorgesehen wird. Bei Vorsehen zweier Triggersignale ist es vorteilhaft, wenn das zweite Triggersignal für die Aufnahme des nachfolgenden Bilds bereits während des Auslesevorgangs für das erstere Bild erfolgt, also nicht abgewartet wird, bis der Auslesevorgang abgeschlossen ist. Dadurch kann der zeitliche Abstand zwischen den Aufnahmen der beiden Bilder gering gehalten und störende Hintergrundstrahlung durch nachfolgende Subtraktion der Bilder zumindest teilweise eliminiert werden.

Die Bildaufnahme des Objekts kann unmittelbar nach einem Trigger beginnen, beispielsweise nach dem letzten Puls eines Pulszugs des das Objekt bestrahlenden Lasers. Ist jedoch bekannt, dass das Objekt mehr als einem vorbestimmten Abstand von der Kamera entfernt ist, so kann es sinnvoll sein, eine erste Bildaufnahme des Objekts für die Dauer einer Verzögerungszeit zu verzögern. Die Verzögerungszeit bzw. diese Zeitspanne ist zweckmäßigerweise abhängig von einer Entfernung des Objekts von der Kamera. Die Entfernung wird insofern zur Ermittlung der Verzögerungszeit verwendet. Ein Triggersignal kann als Beginn der Verzögerungszeit beziehungsweise der Verzögerungsdauer verwendet werden. Speziell bei unbekannten Abständen zwischen Objekt und Kamera kann es auch sinnvoll sein, über eine feste Zeitdauer nach einem Trigger zu integrieren, um damit einen gewissen Abstandsbereich zwischen Objekt und Kamera auswerten zu können, bei dem beispielsweise nicht alle reflektierten Einzelpulse von der Kamera empfangen werden können.

Zu Abwehr eines abfliegenden Flugkörpers sollte dieser beziehungsweise ein Teil oder Unterbaugruppe davon nicht nur in seiner Ausrichtung erkannt bzw. bestimmt werden, sondern der Flugkörper optisch verfolgt werden, sodass die Anflugrichtung und insbesondere auch eine Entfernung des Flugkörpers bestimmt wird. Hierfür ist die Kamera zweckmäßigerweise eine Verfolgungskamera mit einem Sensor, insbesondere einem bildauflösenden Matrixdetektor. Zweckmäßigerweise ist die Kamera Teil eines Systems zur Bekämpfung eines anfliegenden Flugkörpers.

Um eine Störung der Bildaufnahmen zur Verfolgung des Flugkörpers zu vermeiden, ist es vorteilhaft, wenn die Verfolgung des anfliegenden Flugkörpers in einer anderen Wellenlänge bzw. in einem anderen Spektralbereich erfolgt, insbesondere einem anderen infraroten Spektralbereich, als die Aufnahme der beiden Bilder. Hierfür sind zweckmäßigerweise zwei Sensoren, insbesondere zwei bildauflösende Matrixdetektoren, vorhanden, die sich in ihrem spektralen Empfindlichkeitsbereich unterscheiden, also in unterschiedlichen - insbesondere infraroten - Spektralbereichen arbeiten. Ebenfalls vorteilhaft ist jeweils vor einen Sensor ein Filter vorgeschaltet, wobei die Spektralbereiche, in denen die Filter transparent sind, unterschiedlich sind, so dass die Sensoren in voneinander getrennten Spektralbereichen bestrahlt werden.

Die Erfindung ist außerdem gerichtet auf eine Vorrichtung zum Erkennen einer Ausrichtung eines Objekts gemäß den Merkmalen von Patentanspruch 8, die einen Strahler zum Beleuchten des Objekts und eine Kamera zum Aufnehmen des Objekts aufweist. Die Vorrichtung ist mit einer Auswerteeinheit ausgeführt, die dazu vorbereitet ist, das Objekt mithilfe der Kamera zumindest zweimal aufzunehmen und das Objekt mithilfe des Strahlers so zu beleuchten, dass es für eines der Bilder anders bestrahlt aufgenommen wird als für das andere Bild, die Bilder voneinander zu subtrahieren und unter Verwendung der Bilddaten des aus der Subtraktion erhaltenen Beleuchtungsreflexes die Ausrichtung des Objekts zu bestimmen.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar.

So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Lenkflugkörper im Anflug aus Sicht einer Kamera eines Verkehrsflugzeugs,
- FIG 2: eine schematische Darstellung einer Infrarotkamera mit zwei Detektoren und einem angeschlossenen Strahler zum Aussenden von Laserstrahlung in Richtung zum Lenkflugkörper,
- FIG 3: eine Funktion der Fluktuation der spektralen Leistungsdichte der Wärmestrahlung des Abgasstrahls des Lenkflugkörpers aus FIG 1,
- FIG 4: ein Diagramm mit Zeitabläufen zweier Bildaufnahmen des anfliegenden Lenkflugkörpers und
- FIG 5: einen Ausschnitt der Abläufe aus FIG 4 in einer höheren Detailtiefe.

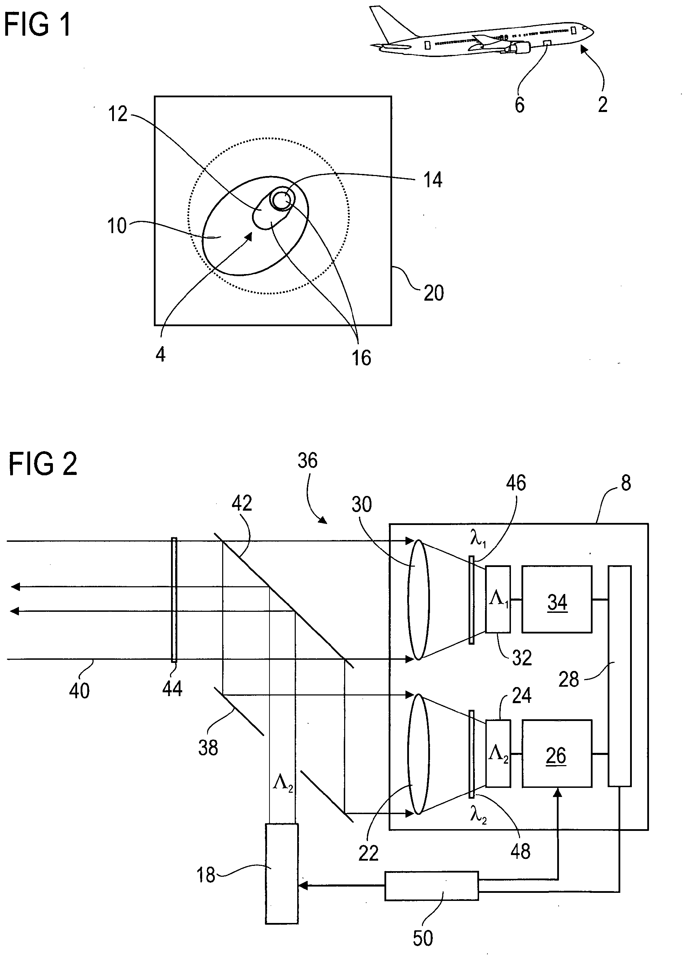

FIG 1 zeigt ein Fahrzeug 2, das in diesem Ausführungsbeispiel ein Luftfahrzeug ist, beispielsweise ein Verkehrsflugzeug in Form einer Passagiermaschine. Die Erfindung ist jedoch eben so gut auf andere Fahrzeuge anwendbar. Im Anflug auf das Fahrzeug 2 befindet sich ein Flugkörper 4, beispielsweise ein Lenkflugkörper, der als Luftrakete, also Boden-Luft-Rakete oder Luft-Luft-Rakete, ausgeführt sein kann. An Bord des Fahrzeugs 2 ist ein Aufklärungssystem 6 vorhanden, das den Anflug des Flugkörpers 4 erkannt hat. Das Aufklärungssystem 6 umfasst eine Kamera 8 (FIG 2), mit der eine Verfolgung des anfliegenden Flugkörpers 4 vorgenommen wird. Hierzu ist die Blickrichtung der Kamera 8 im Raum um das Fahrzeug 2 verschwenkbar, und die Kamera 8 weist ein Verfolgungssystem auf, das den anfliegenden Flugkörper 4 während seines Anflugs verfolgt. Zum besseren Verständnis ist der Flugkörper 4 in FIG 1 aus der Perspektive der aufnehmenden Kamera 8 dargestellt, sodass der Flugkörper 4 auf den Betrachter zufliegt beziehungsweise etwas an ihm vorbei zielt.

Der Flugkörper 4 ist durch ein Triebwerk, beispielsweise einen Raketenmotor, angetrieben und erzeugt Verbrennungsgase bzw. Triebwerksabgase 10, die im Hintergrund des von der Kamera 4 aufgenommenen Bilds 20 des Flugkörpers 4 sichtbar sind. Der Flugkörper 4 selbst umfasst ein Gehäuse 12 und eine Suchoptik 14, die relativ zur Flugkörperachse zweidimensional verschwenkbar ist. Die Suchoptik 14 dient zum Lenken des Flugkörpers 4, wobei der Flugkörper 4 in die Richtung nachlenkt, in die die Suchoptik 14 schaut. Für eine zuverlässige Verfolgung des anfliegenden Flugkörpers 4 ist es daher von Bedeutung, in welche Richtung der Flugkörper 4 beziehungsweise dessen Längsachse ausgerichtet ist und auch in welche Richtung die Suchoptik 14 ausgerichtet ist, da diese die zukünftige Richtung der Längsachse des Flugkörpers 4 maßgeblich beeinflusst.

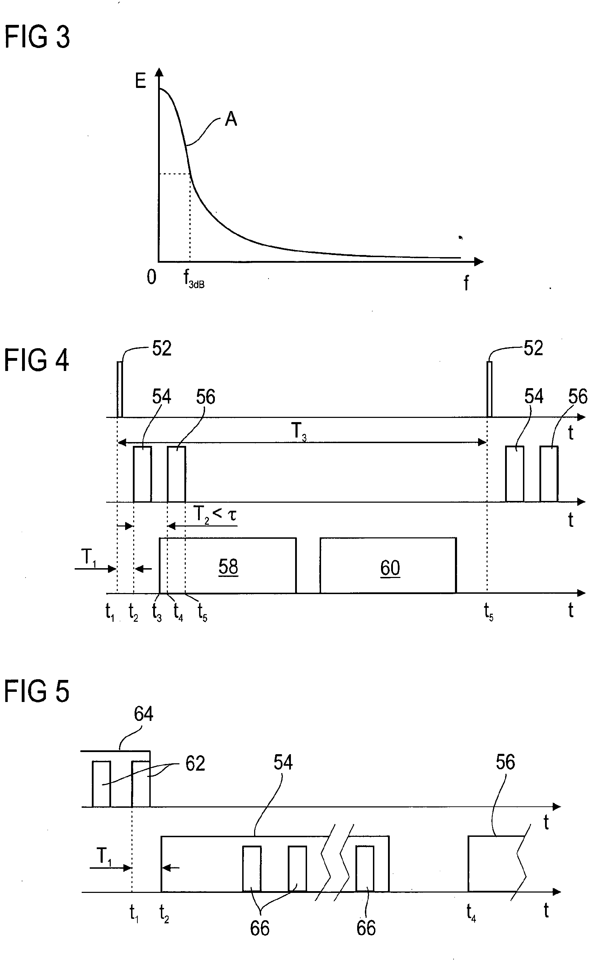

Um zur Verfolgung des Flugkörpers 4 nicht von Tageslicht abhängig zu sein, ist die Kamera 8 im infraroten Spektralbereich sensitiv. Im infraroten Spektralbereich ist das Triebwerksabgas 10 und damit - an einem Ende des Triebwerkstrahls - auch der Flugkörper 4 leicht zu finden. Um eine Ausrichtung des Flugkörpers 4 zu erkennen, muss jedoch auch der Flugkörper 4 an sich und insbesondere die Suchoptik 14 in einem Bild erkennbar sein. Deren infrarote optische Signatur wird jedoch durch die heißen Triebwerksabgase 10 im Bild überdeckt, sodass die Erkennung des verfolgten Objekts 16, nämlich des Flugkörpers 4 an sich oder eines Teils davon, beispielsweise der Suchoptik 14, stark erschwert wird.
Um das Objekt 16 und insbesondere dessen Ausrichtung dennoch erkennen zu können, wird das Objekt 16 aktiv angestrahlt. Die Anstrahlung erfolgt gerichtet und ist in FIG 1 durch einen gepunkteten Kreis um den Flugkörper 4 angedeutet. Die gerichtete Bestrahlung kann mit einem Strahler 18 in Form eines Lasers (FIG 2) durchgeführt werden, der insbesondere im infraroten Spektralbereich das Objekt 16 beleuchtet. Die Beleuchtung 64 (FIG 5) wird vom Objekt 16 zurückgestreut, insbesondere reflektiert, sodass das Objekt 16 vor dem Bildhintergrund etwas stärker hervortritt. Dieses Hervortreten kann weiter intensiviert werden durch die Aufnahme zweier Bilder 20 des Objekts 16, wobei eines der Bilder 20 unter Beleuchtung 64 des Objekts 16 aufgenommen wird und das andere der Bilder 20 mit anderer beziehungsweise fehlender aktiver Beleuchtung 64. Durch eine Bildsubtraktion können im daraus resultierenden Bild gleichbleibende Bildhintergründe im Wesentlichen eliminiert werden, sodass das Objekt 16 durch die Beleuchtungsdifferenz stärker hervorgehoben wird. FIG 1 zeigt anhand des äußeren durchgezogenen Rechtecks exemplarisch zwei übereinander liegende Bilder 20, die in der gleichen Raumrichtung aufgenommen wurden, also sich hinsichtlich der Raumrichtung genau überdecken. Hierzu wird die Kamera 8 während der Aufnahme der beiden Bilder 20 dem Objekt nachgeführt, so dass dieses jeweils an der gleichen Bildposition verbleibt, also die beiden Bilder 20 raumrichtungsbezogen zumindest im Wesentlichen exakt übereinander liegen. Aufgrund der schnellen Bildabfolge der beiden aufgenommen Bilder 20 kann u. U. auf eine kontinuierliche Nachführung der Kamera 8 verzichtet werden, da eine Änderung der Raumrichtung so gering ist, dass diese vernachlässigbar ist.

Die Aufnahme der Bilder 20 erfolgt mithilfe der Kamera 8, die in FIG 2 detaillierter dargestellt ist. Die Kamera 8 umfasst eine Optik 22, einen Sensor 24, der beispielsweise als Matrixdetektor und damit als bildauflösender Detektor ausgeführt ist, und einen Sensorprozessor 26. Eine Steuereinheit, die auch Auswerteeinheit 28 sein kann, kann Bestandteil der Kamera 8 sein oder als Einheit außerhalb der Kamera 8 ausgeführt sein. Im Ausführungsbeispiel der FIG 2 umfasst die Kamera 8 neben diesem Sensorsystem ein zweites Sensorsystem mit einer Optik 30, einem Sensor 32, der als bildauflösender Detektor in Form eines Matrixdetektors ausgeführt ist, und einen Sensorprozessor 34. Dieses zweite Sensorsystem dient zur Verfolgung des Objekts 16 und ist optional vorhanden, sodass es auch an einer anderen Kamera realisiert oder weggelassen werden kann. Die gesamte Vorrichtung 36 zum Erkennen einer Ausrichtung des Objekts 16 beinhaltet außerdem einen Strahler 18 zum Beleuchten des Objekts 16, der im Ausführungsbeispiel aus FIG 2 beispielsweise ein Laser ist.

Der Beleuchtungsstrahl des Strahlers 18 wird durch einen Einkoppelspiegel 38, der in diesem Ausführungsbeispiel ein Spiegel mit einem Loch bzw. einer vorzugsweise mittig angeordneten Öffnung ist, in den Aufnahmestrahlengang 40 der Optik 22 eingeführt. Bei Vorhandensein des weiteren Sensorsystems ist ein Auskoppelelement 42 vorteilhaft, beispielsweise in Form eines Auskoppelspiegels. Die Systemapertur 44 begrenzt den Aufnahmestrahlengang 40.

Bei dem Ausführungsbeispiel aus FIG 2 umfasst die Kamera 8 zwei optische Sensorsysteme, wobei das erste optische Sensorsystem zum Erkennen der Ausrichtung des Objekts 16 und das zweite optische Sensorsystem zum Verfolgen des Objekts 16 dient. Um die Verfolgung des Objekts 16 möglichst wenig durch die Einkopplung des Strahlers 18 beziehungsweise des Lasers zu stören, ist es sinnvoll, zwei verschiedene Aufnahmewellenlängenbänder für die beiden optischen Sensorsysteme zu verwenden. Dies wird durch einen spektralselektiven Strahlteiler erreicht, der beispielsweise in Form des Auskoppelelements 42 realisiert ist. Strahlung innerhalb eines ersten Wellenlängenbands Λ₁ bzw. Spektralbereichs passiert das Auskoppelelement 42, und Strahlung innerhalb eines zweiten Wellenlängenbands Λ₂ bzw. Spektralbereichs wird von dem Auskoppelelement 42 reflektiert und erreicht das erste optische Sensorsystem. Zur genaueren spektralen Trennung umfasst die Kamera 8 zwei Spektralfilter 46, 48 vor den entsprechenden Sensoren 32 beziehungsweise 24 mit einem schmalen Durchlassbereich um die Wellenlänge λ₁ beziehungsweise λ₂.

Ein Modulator 50 steuert den Strahler 18 beziehungsweise den Laser an, sodass dieser seine Strahlungspulse entsprechend der Modulation des Modulators 50 aussendet. Zur Koordinierung der Bildaufnahme entsprechend der Strahlungspulse steuert der Modulator 50 auch den Sensorprozessor 26 an. Der Modulator 50 wird von der Steuereinheit angesteuert und empfängt von der Steuereinheit übergeordnete Befehle zum Anstrahlen des Objekts 16 und zur Aufnahme von Bildern 20 des Objekts 16.

Zur Ausrichtungserkennung des Objekts 16 und insbesondere zur Verfolgung des Objekts 16 steuert die Steuereinheit bzw. Auswerteeinheit 28 die Beleuchtung 64und Aufnahme des Objekts 16 über das erste optische Sensorsystem an. Vor, während oder nach dieser Aufnahme kann das Objekt 16 durch das weitere optische Sensorsystem verfolgt werden und hierfür zeitlich punktuell, regelmäßig und/oder kontinuierlich aufgenommen werden. Die Lage des Objekts 16 im Raum wird hierbei von der Auswerteeinheit 28 ausgewertet, die auch die Ausrichtung der Kamera 8 im Raum steuert, sodass diese auf das Objekt 16 ausgerichtet bleibt. Anhand der Figuren 3 bis 5 wird im Folgenden ein mögliches Verfahren zum Erkennen der Ausrichtung des Objekts 16, also des Flugkörpers 4 und/oder der Suchoptik 14, beschrieben.

Zur Steuerung des Verfahrens, das im Folgenden anhand von FIG 3 erläutert wird, sind in der Auswerteeinheit 28 Daten zur Bildabfolge der Aufnahme zweier Bilder 20 des Objekts 16 hinterlegt. FIG 3 zeigt die Autokorrelationsfunktion A der spektralen Leistungsdichte des Triebwerksabgases 10 des Flugkörpers 4. Aufgetragen ist die spektrale Leistungsdichte E der Strahlung aus einem Raumwinkelbereich zur Kamera 8 über die Frequenz f der Fluktuation der spektralen Leistungsdichte. Die Autokorrelationsfunktion kann aus der Fourier-Transformation der Funktion der spektralen Leistungsdichte über die Zeit gewonnen werden und ist zumindest im Wesentlichen eine Exponentialfunktion exp(-t/τ), mit τ: Korrelationszeit = 1/(2πf_{3dB}). Die Halbwertsfrequenz f_{3dB} ist in FIG 3 dargestellt und ist die Frequenz, an der die Autokorrelationsfunktion auf die Hälfte abgefallen ist.

Die Korrelationszeit τ ist der Zeitraum, innerhalb der die Autokorrelation der spektralen Leistungsdichte aus einem Raumwinkelbereich zur Kamera 8 auf die Hälfte abgefallen ist. Um eine immer noch gewisse Ähnlichkeit der spektralen Leistungsdichte in beiden Bildern 20 zu erhalten, müssen insofern zwei Aufnahmezeitpunkte gewählt werden, die um weniger als die Korrelationszeit τ auseinander liegen. Wie aus FIG 3 sichtbar ist, dominieren die niedrigen Frequenzen in der Fluktuation der spektralen Leistungsdichte, sodass die Halbwertsfrequenz f_{3dB} eine relativ kleine Frequenz ist. Die Korrelationszeit τ ist mithin relativ groß und beträgt beim Triebwerksabgas 10 im infraroten Spektralbereich üblicherweise zwischen 2 ms und 50 ms, wobei im Extremfall die Korrelationszeit τ der Triebwerksabgase 10 auch deutlich geringer sein kann . Soll eine spektrale Leistungsdichte beziehungsweise die Hintergrundstrahlung hinter dem Objekt 16 in zwei hintereinander aufgenommenen Bildern 20 durch die Subtraktion der Bilder 20 zuverlässig verringert werden, so müssen diese beiden Bilder 20 innerhalb der Korrelationszeit τ aufgenommen werden.

FIG 4 zeigt in einem Zeitschema eine solche Bildaufnahme. Durch beispielsweise den Modulator 50 wird zum Zeitpunkt t₁ ein Triggersignal 52 für die Bildaufnahme ausgegeben. Das Triggersignal 52 kann hierbei ein Puls einer Beleuchtung 64 des Objekts 16 durch den Strahler 18 sein. Eine vorbestimmte Zeitspanne T₁ nach dem Triggersignal 52 erfolgt zum Zeitpunkt t₂ die Bildaufnahme 54 des ersten Bilds 20 des Objekts 16 und dessen Hintergrundstrahlung. Die Bildaufnahmezeitdauer für die Bildaufnahme 54 ist ein Integrationszeitraum, so dass das oder die Detektorelemente des Sensors 24 somit zur Integration geöffnet sind. Während der Bildaufnahme 54 wird das Objekt 16 vom Strahler 18 beleuchtet, so dass das beleuchtete Objekt 16 aufgenommen wird. Oder die Beleuchtung 64 endet so kurz vor der Bildaufnahme 54, dass vom Objekt 16 reflektierte Beleuchtungsstrahlung durch die Laufzeitverzögerung noch während der Bildaufnahme 54 an der Kamera 8 eintrifft.

Nach Abschluss der Integration beziehungsweise Bildaufnahme 54 erfolgt zum Zeitpunkt t₄ die Bildaufnahme 56 des zweiten Bilds 20, wobei die Zeitspanne T₂ zwischen den Bildaufnahmen 54, 56, genauer: zwischen den jeweiligen Anfängen der Bildaufnahmen 54, 56, kleiner als die Korrelationszeit τ der spektralen Leistungsdichte des Triebwerksabgases 10 im Bildhintergrund in der Bildnachbarschaft des Objekts 16 ist. Die Zeitspanne T₂ liegt in diesem Ausführungsbeispiel also abhängig von der Korrelationszeit τ unterhalb von dieser. Beträgt die Korrelationszeit τ bspw. 50 ms so muss die Zeitspanne T₂ kürzer als 50 ms sein, beträgt die Korrelationszeit τ 2 ms, so muss die Zeitspanne T₂ kürzer als 2 ms sein. Bevorzugt liegt die Zeitspanne T₂ jedoch im Mikrosekundenbereich und damit zumindest eine oder zwei Größenordnungen unterhalb der Korrelationszeit τ von Triebwerksabgasen 10. Die Korrelationszeit τ kann in der Auswerteeinheit 28 hinterlegt sein zur Vorgabe einer entsprechenden Zeitspanne T₂ und entsprechenden Steuerung der Bildaufnahmen 54, 56. Vorliegend ist jedoch die Zeitspanne T₂ in der Auswerteeinheit 28 konkret hinterlegt und beträgt z. Bsp. 100 µs. Zudem ist auch die Zeitspanne zwischen dem Beginn t₂ der ersten Bildaufnahme 54 und dem Ende t₅ der zweiten Bildaufnahme 56 kleiner als die Korrelationszeit τ und liegt ebenfalls unter 2 ms bzw. 50 ms. Vorzugsweise liegt die Zeitspanne zwischen dem Beginn t₂ der ersten Bildaufnahme 54 und dem Ende t₅ der zweiten Bildaufnahme 56 - so wie die Zeitspanne T₂ - im Mikrosekundenbereich.

Zu einem Zeitpunkt t₃ beginnt das Auslesen 58 des aufintegrierten Bildsignals aus der ersten Bildaufnahme 54. Das Auslesen 58 kann hierbei vor oder nach dem Beginn der zweiten Bildaufnahme 56 beginnen, wobei die zweite Bildaufnahme 56 vor oder während dem Auslesen 58 beginnt und zumindest während dem Auslesen 58 abgeschlossen sein sollte. Da die zweite Bildaufnahme 56 insofern vor dem Ende des Auslesens 58 aus der ersten Bildaufnahme 54 beginnt, umfasst jedes Detektorelement des Sensors 24 zwei Integrationszellen, nämlich jeweils eine Integrationszelle für jede der beiden Bildaufnahmen 54, 56. Zunächst wird also nur die erste Integrationszelle ausgelesen und beim späteren Auslesen 60 die zweite Integrationszelle. Beide Bildaufnahmen 54, 56 und beide Auslesevorgänge 58, 60 finden während einer einzigen Bildzeit T₃ statt, die zwischen den beiden Triggersignalen 52 liegt. Zum nachfolgenden Zeitpunkt t₅ erfolgt das nächste Triggersignal 52, und es beginnt die nachfolgende Bildzeit T₃, in der erneut zwei Bildaufnahmen 54, 56 des Objekts 16 stattfinden.

Anstelle des hier gezeigten und beschriebenen Funktionsablaufs, der mit einem Triggersignal 52 zur Aufnahme der ersten und der zweiten Bildaufnahme 54, 56 auskommt, ist jedoch auch folgender alternativer Ablauf beruhend auf zwei Triggersignalen 52 bezogen auf eine Bildzeit T₃ möglich: Die beiden Bildaufnahmen 54, 56 bzw. Integrationen werden jeweils durch ein Triggersignal 52 des Modulators 50 oder der Auswerteeinheit 28 gestartet, wobei das Triggersignal 52 für die zweite Bildaufnahme 56 bereits während des Auslesevorgangs 56 für die erste Bildaufnahme 54 erfolgt, also nicht abgewartet wird, bis der Auslesevorgang 56 abgeschlossen ist. Dadurch kann der zeitliche Abstand zwischen den Bildaufnahmen 54, 56 gering gehalten und störende Hintergrundstrahlung durch nachfolgende Subtraktion der Bilder 20 zumindest teilweise eliminiert werden.

Die beiden in FIG 1 schematisch angedeuteten Bilder 20 aus den beiden Bildaufnahmen 54, 56 des Objekts 16 werden anschließend durch den Sensorprozessor 26 subtrahiert und das resultierende Bildsignal wird an die Auswerteeinheit 28 weitergegeben. Die Auswerteeinheit 28 ermittelt mithilfe bildverarbeitender Methoden die Ausrichtung des Objekts 16. Die Ausrichtung des Flugkörpers 4 kann hierbei aus dem Bild des Flugkörpers 4 ermittelt werden, indem beispielsweise das Verhältnis von Länge zur Breite des Flugkörpers 4 gebildet wird und daraus ein Verfehlwinkel errechnet wird. Aus der Lage des Suchkopfs kann zudem zwischen vorne und hinten unterschieden werden, sodass die Ausrichtung des Flugkörpers 4 in Polarkoordinaten als zweidimensionalem Koordinatensystem bestimmt werden kann, wobei der Verfehlwinkel eine Koordinate bzw. Dimension und die Drehung der Längsausrichtung des Flugkörpers 4 im Flugkörperbild als weitere Koordinate verwendet werden kann.

Im Falle der Suchoptik 14 als Objekt 16 reflektiert diese die von dem Strahler 18 emittierte Infrarotstrahlung entsprechend ihrer Ausrichtung an die Kamera 8 zurück. Ist die Suchoptik 14 auf die Kamera 8 gerichtet, so ist das Reflexionssignal am stärksten, das mit zunehmendem Verfehlwinkel der Suchoptik 14 abnimmt. Aus der Stärke des reflektierten Signals kann daher auf die Ausrichtung der Suchoptik 14 des Flugkörpers 4 geschlossen werden. Hierbei ist die Bestimmung der Ausrichtung der Suchoptik 14 durch den Verfehlwinkel, also eine Dimension, ausreichend.

FIG 5 zeigt eine weitere Option des Bildaufnahmeverfahrens. Im oberen Zeitstrahl sind die letzten zwei Pulse 62 eines Pulszugs einer Beleuchtung 64 des Objekts 16, beispielsweise durch den Strahler 18 in Form eines Lasers, gezeigt. Das Ende des letzten Pulses 62 markiert das Ende der Bestrahlung des Objekts 16 durch den Strahler 18. Ein Puls 62 des Pulszugs, beispielsweise der letzte Puls 62, wird als Triggersignal 52 zu Bildaufnahme 54 verwendet.

Je nach Entfernung des Objekts 16 von der Kamera 8 dauert es einen entsprechenden Zeitraum, bis der Laserreflex die Kamera 8 erreicht. Bei sehr kurzer Beleuchtung 64 des Objekts 16 durch den Laserstrahl kann diese Flugzeit ausreichen, um die Beleuchtung 64 von der Bildaufnahme 54 zu entkoppeln. Die Beleuchtung 64 kann daher enden, bevor die Bildaufnahme 54 beginnt. Alternativ oder zusätzlich kann die Bildaufnahme 54 des ersten Bilds 20 um die Zeitspanne T₁ verzögert werden, wobei diese Verzögerungszeit T₁ abhängig gemacht werden kann von der Entfernung des Objekts 16 zur Kamera 8. Je größer die Entfernung ist, desto größer kann die Verzögerungszeit T₁ eingestellt werden.

Durch das Legen des Beginns t₂ der Bildaufnahme 54 hinter das Ende der Beleuchtung 64 kann eine Störung der Bildaufnahme 54 durch die aktiv ausgesendete Strahlung vermieden werden. Das Objekt 16 wird insofern vor der ersten Bildaufnahme 54 beleuchtet, wobei die Beleuchtung 64 vor dem Beginn der Bildaufnahme 54 endet. Die am Objekt 16 reflektierte Strahlung aus der Beleuchtung 64 trifft jedoch während der ersten Bildaufnahme 54 an der Kamera 8 ein, so dass das Objekt 16 beleuchtet aufgenommen wird. Dies ist in FIG 5 dargestellt durch die Reflexionspulse 66, die die Reflexe der Pulse 62 am Objekt 16 sind. Die Reflexionspulse 66 können hierbei durch Reflexion und/oder Streuung der Pulse 62 am Objekt 16 entstehen. In FIG 5 ist zu sehen, dass das Eintreffen der ersten Reflexionspulse 66 eine Zeitlang hinter dem Beginn t₂ der ersten Bildaufnahme 54 liegt. Dies dient zur Sicherheit, dass die erste Bildaufnahme 54 alle Reflexionspulse 66 einfängt, auch bei nicht genau bekannter Entfernung des Objekts 16 von der Kamera 8. Bei geringem Abstand ist die zeitliche Verschiebung zwischen ausgesendeter und empfangener Strahlung geringer. Es werden dann nicht alle Einzelpulse empfangen, aber dies ist dann trotzdem ausreichend, weil die Signalhöhe der reflektierenden Pulse bei geringerem Abstand höher ist.

### Bezugszeichenliste

- 2: Fahrzeug
- 4: Flugkörper
- 6: Aufklärungssystem
- 8: Kamera
- 10: Triebwerksabgas
- 12: Gehäuse
- 14: Suchoptik
- 16: Objekt
- 18: Strahler
- 20: Bild
- 22: Optik
- 24: Sensor
- 26: Sensorprozessor
- 28: Auswerteeinheit
- 30: Optik
- 32: Sensor
- 34: Sensorprozessor
- 36: Vorrichtung
- 38: Einkoppelspiegel
- 40: Aufnahmestrahlung
- 42: Auskoppelelement
- 44: Systemapertur
- 46: Spektralfilter
- 48: Spektralfilter
- 50: Modulator
- 52: Triggersignal
- 54: Bildaufnahme
- 56: Bildaufnahme
- 58: Auslesen
- 60: Auslesen
- 62: Puls
- 64: Beleuchtung
- 66: Reflexionspuls
- A: Autokorrelationsfunktion
- E: Leistungsdichte
- f: Frequenz
- T_{1,2}: Zeitspanne
- T₃: Bildzeit
- τ: Korrelationszeit

## Patentansprüche

1. Verfahren zum Bestimmen einer Ausrichtung eines Objekts (16) in Form einer Unterbaugruppe eines anfliegenden Flugkörpers (4), bei dem die Unterbaugruppe mithilfe einer im infraroten Spektralbereich empfindlichen Kamera (8) zumindest zweimal aufgenommen wird und die Unterbaugruppe bei einem der Bilder (20) anders beleuchtet aufgenommen wird als bei dem anderen Bild (20), die Bilder (20) voneinander subtrahiert werden und unter Verwendung der Bilddaten des aus der Subtraktion erhaltenen Beleuchtungsreflexes die Ausrichtung der Unterbaugruppe bestimmt wird, wobei
a) die Aufnahme (54) bei anderer Beleuchtung dadurch erfolgt, dass die Unterbaugruppe vor und/oder während der Aufnahme (54) des ersteren Bilds (20) durch einen Strahler (18) aktiv beleuchtet wird und während der Aufnahme (56) des unmittelbar nachfolgenden Bilds (20) vom Strahler (18) unbeleuchtet ist,
b) die andere Beleuchtung das Anstrahlen der Unterbaugruppe durch einen Laser (18) beinhaltet und der Laser (18) einen Pulszug sendet und ein Puls (62) des Pulszugs als Trigger für eine Bildaufnahme des ersteren Bilds (20) und / oder des nachfolgend aufgenommenen Bilds (20) der Unterbaugruppe verwendet wird,
c) innerhalb einer Bildzeit (T₃), die die Zeitspanne zum Aufnehmen und zum Auslesen eines Bilderpaars umfasst, die Aufnahme (56) des nachfolgend aufgenommenen Bilds (20) während des Auslesezeitraums (58) des vorhergehend aufgenommenen Bilds (20) liegt, und
d) der zeitliche Aufnahmeabstand zwischen den Aufnahmen (54, 56) kleiner als eine Korrelationszeit (τ) der zeitlich nicht konstanten Strahlung des Raketenmotors des Flugkörpers (4) und/oder dessen Verbrennungsgase ist.

2. Verfahren nach Anspruch 1,
wobei die Unterbaugruppe eine Suchoptik des Flugkörpers (4) ist.

3. Verfahren nach Anspruch 1 oder 2,
wobei der zeitliche Aufnahmeabstand zwischen den beiden Bildern (20) kleiner als 10 ms ist.

4. Verfahren nach einem der vorhergehenden Ansprüche,
wobei die beiden Bilder (20) mit einem Matrixdetektor der Kamera (8) aufgenommen werden.

5. Verfahren nach einem der vorhergehenden Ansprüche,
wobei der Beginn der ersteren Bildaufnahme (54) der Unterbaugruppe für die Dauer einer Verzögerungszeit (T₁) nach dem letzten Puls des Pulszugsverzögert wird, die von einer Entfernung der Unterbaugruppe von der Kamera (8) abhängig ist.

6. Verfahren nach einem der vorhergehenden Ansprüche,
wobei mithilfe der Kamera (8) eine Verfolgung des anfliegenden Flugkörpers (4) durchgeführt wird.

7. Verfahren nach Anspruch 6,
wobei die Verfolgung des anfliegenden Flugkörpers (4) in einem anderen Spektralbereich erfolgt als die Aufnahme der beiden Bilder (20).

8. Vorrichtung (36) zum Erkennen einer Ausrichtung eines Objekts (16) in Form einer Unterbaugruppe eines anfliegenden Flugkörpers (4) mit einem Strahler in Form eines Lasers (18) zum Beleuchten der Unterbaugruppe, einer im infraroten Spektralbereich empfindlichen Kamera (8) zum Aufnehmen der Unterbaugruppe mit einem Matrixdetektor, der für jedes Pixel zwei Integrationszellen aufweist, und einer Auswerteeinheit (28), die dazu vorbereitet ist,
a) die Unterbaugruppe mithilfe der Kamera (8) zumindest zweimal aufzunehmen und die Unterbaugruppe mithilfe des Lasers (18) so zu beleuchten, dass es für das erstere der Bilder (20) durch den Laser (18) aktiv bestrahlt aufgenommen wird und für das unmittelbar nachfolgende Bild (20) unbestrahlt aufgenommen wird,
b) einen Puls des Pulszugs des Lasers (18) als Trigger für eine Aufnahme (54) des ersteren Bilds (20) zu verwenden,
c) innerhalb einer Bildzeit (T₃), die die Zeitspanne zum Aufnehmen und zum Auslesen eines Bilderpaars umfasst, die Aufnahme (56) des nachfolgend aufgenommenen Bilds (20) während des Auslesezeitraums (58) des vorhergehend aufgenommenen Bilds (20) zu starten,
d) einen zeitlichen Aufnahmeabstand zwischen den Aufnahmen (54, 56) vorzusehen, der kleiner als eine Korrelationszeit (τ) der zeitlich nicht konstanten Strahlung des Raketenmotors des Flugkörpers (4) und/oder dessen Verbrennungsgase ist, und
e) die Bilder (20) voneinander zu subtrahieren und unter Verwendung der Bilddaten des aus der Subtraktion erhaltenen Beleuchtungsreflexes die Ausrichtung der Unterbaugruppe zu bestimmen.

## Claims

1. Method for determining an orientation of an object (16) in the form of a subassembly of an approaching missile (4), in which the subassembly is recorded at least twice using a camera (8) which is sensitive in the infrared spectral range and, in one of the images (20), the subassembly is recorded with different illumination than in the other image (20), the images (20) are subtracted from one another and, using the image data of the illumination reflection obtained from the subtraction, the orientation of the subassembly is determined, wherein
a) the recording (54) with different illumination is effected by the subassembly being actively illuminated by an emitter (18) before and/or during the recording (54) of the earlier image (20) and not being illuminated by the emitter (18) during the recording (56) of the immediately following image (20),
b) the different illumination includes irradiating the subassembly by a laser (18) and the laser (18) emits a pulse train, and a pulse (62) of the pulse train is used as a trigger for an image recording of the earlier image (20) and/or of the image (20) of the subassembly that is recorded later,
c) within an image time (T₃), which comprises the time period for recording and reading an image pair, the recording (56) of the image (20) that is recorded later occurs during the reading time period (58) of the image (20) that is recorded earlier, and
d) the recording time interval between the recordings (54, 56) is less than a correlation time (τ) of the temporally non-constant radiation of the rocket engine of the missile (4) and/or of the combustion gases thereof.

2. Method according to Claim 1, wherein the subassembly is a search optics of the missile (4).

3. Method according to Claim 1 or 2, wherein the recording time interval between the two images (20) is less than 10 ms.

4. Method according to one of the preceding claims, wherein the two images (20) are recorded with a matrix detector of the camera (8).

5. Method according to one of the preceding claims, wherein the start of the earlier image recording (54) of the subassembly is delayed for the period of a delay time (T₁) after the last pulse of the pulse train, which period is dependent on a distance of the subassembly from the camera (8).

6. Method according to one of the preceding claims, wherein the approaching missile (4) is tracked using the camera (8).

7. Method according to Claim 6, wherein tracking of the approaching missile (4) is effected in a different spectral range than the recording of the two images (20) .

8. Apparatus (36) for detecting an orientation of an object (16) in the form of a subassembly of an approaching missile (4), having an emitter in the form of a laser (18) for illuminating the subassembly, a camera (8), which is sensitive in the infrared spectral range, for recording the subassembly with a matrix detector having two integration cells for each pixel, and an evaluation unit (28) which is prepared
a) to record the subassembly at least twice using the camera (8) and to illuminate the subassembly using the laser (18) such that it is recorded with active illumination by the laser (18) for the earlier of the images (20) and is recorded without illumination for the immediately following image (20),
b) to use a pulse of the pulse train of the laser (18) as a trigger for a recording (54) of the earlier image (20),
c) to start, within an image time (T₃) which comprises the time period for recording and reading an image pair, the recording (56) of the image (20) that is recorded later during the reading time period (58) of the image (20) that is recorded earlier,
d) to provide a recording time interval between the recordings (54, 56) that is less than a correlation time (τ) of the temporally non-constant radiation of the rocket engine of the missile (4) and/or of the combustion gases thereof, and
e) to subtract the images (20) from one another and to determine, using the image data of the illumination reflection obtained from the subtraction, the orientation of the subassembly.

## Revendications

1. Procédé pour déterminer une orientation d'un objet (16) sous la forme d'un sous-ensemble d'un missile (4) en approche, selon lequel le sous-ensemble est enregistré au moins deux fois à l'aide d'une caméra (8) sensible dans la plage spectrale des infrarouges et le sous-ensemble, lors de l'une des images (20), est enregistré en étant éclairé différemment que lors de l'autre image (20), les images (20) sont soustraites l'une de l'autre et l'orientation du sous-ensemble est déterminée en utilisant les données d'image de la réflexion de l'éclairage obtenue à partir de la soustraction,
a) l'enregistrement (54) avec un autre éclairage étant effectué en ce que le sous-ensemble est éclairé activement par un projecteur (18) avant et/ou pendant l'enregistrement (54) de la première image (20) et n'est pas éclairé par le projecteur (18) pendant l'enregistrement (56) de l'image (20) directement suivante,
b) l'autre éclairage incluant l'irradiation du sous-ensemble par un laser (18) et le laser (18) émettent un train d'impulsions et une impulsion (62) du train d'impulsions étant utilisée comme déclencheur pour un enregistrement de la première image (20) et/ou de la prochaine image (20) enregistrée du sous-ensemble,
c) à l'intérieur d'un temps d'image (T₃), lequel englobe l'intervalle de temps pour l'enregistrement et pour la lecture d'une paire d'images, l'enregistrement (56) de la prochaine image (20) enregistrée se trouvant pendant la période de lecture (58) de l'image (20) enregistrée précédemment, et
d) l'écart d'enregistrement dans le temps entre les enregistrements (54, 56) étant inférieur à un temps de corrélation (τ) du rayonnement non constant dans le temps du moteur-fusée du missile (4) et/ou de ses gaz de combustion.

2. Procédé selon la revendication 1, le sous-ensemble étant une optique chercheuse du missile (4).

3. Procédé selon la revendication 1 ou 2, l'écart d'enregistrement dans le temps entre les deux images (20) étant inférieur à 10 ms.

4. Procédé selon l'une des revendications précédentes, les deux images (20) étant enregistrées avec un détecteur matriciel de la caméra (8).

5. Procédé selon l'une des revendications précédentes, le début du premier enregistrement d'image (54) du sous-ensemble étant retardé pendant la durée d'un temps de retard (T₁) après la dernière impulsion du train d'impulsions, lequel dépend d'une distance entre le sous-ensemble et la caméra (8).

6. Procédé selon l'une des revendications précédentes, un suivi du missile (4) en approche étant effectué à l'aide de la caméra (8).

7. Procédé selon la revendication 6, le suivi du missile (4) en approche étant effectué dans une plage spectrale différente de celle de l'enregistrement des deux images (20).

8. Dispositif (36) pour déterminer une orientation d'un objet (16) sous la forme d'un sous-ensemble d'un missile (4) en approche, comprenant un projecteur sous la forme d'un laser (18) destiné à éclairer le sous-ensemble, une caméra (8) sensible dans la plage spectrale des infrarouges destinée à enregistrer le sous-ensemble avec un détecteur matriciel, lequel possède deux temps d'intégration pour chaque pixel, et une unité d'interprétation (28) qui est conçue pour
a) enregistrer le sous-ensemble à l'aide de la caméra (8) au moins deux fois et éclairer le sous-ensemble à l'aide du laser (18) de telle sorte qu'il est enregistré en étant éclairé activement par le laser (18) pour la première des images (20) et enregistré en n'étant pas éclairé pour l'image (20) directement suivante,
b) utiliser une impulsion du train d'impulsions du laser (18) comme déclencheur pour un enregistrement (54) de la première image (20),
c) à l'intérieur d'un temps d'image (T₃), lequel englobe l'intervalle de temps pour l'enregistrement et pour la lecture d'une paire d'images, démarrer l'enregistrement (56) de la prochaine image (20) enregistrée pendant la période de lecture (58) de l'image (20) enregistrée précédemment,
d) prévoir un écart d'enregistrement dans le temps entre les enregistrements (54, 56) qui est inférieur à un temps de corrélation (τ) du rayonnement non constant dans le temps du moteur-fusée du missile (4) et/ou de ses gaz de combustion, et
e) soustraire les images (20) l'une de l'autre et déterminer l'orientation du sous-ensemble en utilisant les données d'image de la réflexion de l'éclairage obtenue à partir de la soustraction.
